Europäisches Patentamt

European Patent Office

Office européen des brevets

(19)

(11) Veröffentlichungsnummer: **0 282 717**
**A1**

(12) **EUROPÄISCHE PATENTANMELDUNG**

(21) Anmeldenummer: 88101542.4

(22) Anmeldetag: 03.02.88

(51) Int. Cl.4 **B23Q 11/00** , B23B 15/00

(30) Priorität: 13.02.87 DE 3704606

(43) Veröffentlichungstag der Anmeldung:
21.09.88 Patentblatt 88/38

(84) Benannte Vertragsstaaten:
AT BE CH DE ES FR GB IT LI NL SE

(71) Anmelder: TRAUB Aktiengesellschaft
Ulmer Strasse 49-55
D-7313 Reichenbach/Fils(DE)

(72) Erfinder: Klauss, Walter
Frühlingstrasse 39
D-7321 Adelberg(DE)
Erfinder: Michl, Hans-Jürgen
Hofackerweg 26
D-7311 Notzingen(DE)

(74) Vertreter: Goetz, Rupert et al
Patentanwälte Wuesthoff- v.
Pechmann-Behrens-Goetz Schweigerstrasse
2
D-8000 München 90(DE)

(54) Verfahren und Einrichtung zum Überwachen einer programmgesteuerten Werkzeugmaschine.

(57) Eine programmgesteuerte Werkzeugmaschine für die spanabhebende Bearbeitung von Werkstücken (12) hat mindestens eine automatisch öffnende und schließende Spannvorrichtung (14) für ein Werkstück (12), das innerhalb eines Arbeitsraums (20) der Maschine zu bearbeiten ist. Zum Auffangen des nach der Bearbeitung von der Spannvorrichtung (14) freigegebenen Werkstücks (12) und für dessen Abtransport aus dem Arbeitsraum (20) ist eine Auffangvorrichtung (24) vorgesehen. Die Bearbeitung des Werkstücks (12) sowie die Spannvorrichtung (14) werden von einer Maschinensteuerung (52) gesteuert. Dabei wird ein vom ausgeworfenen Werkstück (12) an der Auffangvorrichtung (24) ausgelöstes Signal überwacht. Vorzugsweise wird das Signal von einer Erschütterung abgeleitet, die das Werkstück (12) nach einer Bewegung auf einer freien Flugbahn beim Aufprall auf die Auffangvorrichtung (24) erzeugt. Wenn das Signal während einer bestimmten Zeitspanne (t) nach dem Öffnen der Spannvorrichtung (14) ausbleibt, werden Funktionen der Maschine zum Zuführen und Bearbeiten eines nachfolgenden Werkstücks (12) stillgesetzt.

FIG. 1

EP 0 282 717 A1

## Verfahren und Einrichtung zum Überwachen einer programmgesteuerten Werkzeugmaschine

Die Erfindung betrifft ein Verfahren und eine Einrichtung zum Überwachen einer programmgesteuerten Werkzeugmaschine für die spanabhebende Bearbeitung von Werkstücken mit
- mindestens einer automatisch öffnenden und - schließenden Spannvorrichtung für ein Werkstück, das innerhalb eines Arbeitsraums der Maschine zu bearbeiten ist,
- einer Auffangvorrichtung zum Auffangen des nach der Bearbeitung von der Spannvorrichtung freigegebenen Werkstücks und für dessen Abtransport aus dem Arbeitsraum, und
- einer Maschinensteuerung, welche die Bearbeitung des Werkstücks sowie die Spannvorrichtung steuert.

Aus der DE 3320247 A1 ist eine Werkzeugmaschine mit den im vorstehenden beschriebenen Merkmalen bekannt, die als Revolver-Drehautomat ausgebildet ist. Dabei ist an einer Hauptspindel eine erste Spannvorrichtung angeordnet, in der eine Werkstoffstange eingespannt wird. Ein aus der Spannvorrichtung herausragender Abschnitt der Werkstoffstange wird nacheinander von mehreren Werkzeugen bearbeitet, die an einem Revolver angeordnet sind. Am Revolver ist zusätzlich eine Gegenspindel angeordnet, die sich mit der Hauptspindel in Fluchtung bringen läßt und ebenfalls eine Spannvorrichtung aufweist. Mit dieser Spannvorrichtung wird ein am freien Ende der Werkstoffstange durch Bearbeitung mittels der Werkzeuge des Revolvers entstandenes Werkstück erfaßt. Dies geschieht in der Weise, daß der Revolver, der auf einer Kreuzschlittenanordnung gelagert ist, mit auf die Hauptspindel ausgerichteter Gegenspindel axial zur Hauptspindel hin bewegt wird, wobei das Werkstück in die Spannvorrichtung der Gegenspindel hineingeschoben wird, und gegen einen in dieser angeordneten Auswerfer stößt. Sobald das Werkstück in der Spannvorrichtung der Gegenspindel eingespannt ist, und während die Werkstoffstange noch in der Spannvorrichtung der Hauptspindel eingespannt bleibt, wird das Werkstück mittels einer gesonderten Abstechvorrichtung von der Werkstoffstange abgestochen. Anschließend wird die Gegenspindel durch Verfahren des Revolvers zu einer Auffangvorrichtung gebracht, die ein in einer ortsfesten Halterung befestigtes Abführrohr aufweist. Die Spannvorrichtung der Gegenspindel wird in deren Achsrichtung gegen die Auffangvorrichtung gedrückt, wodurch der Auswerfer von einer ebenfalls in der Gegenspindel angeordneten Übersetzungsvorrichtung derart betätigt wird, daß er das Werkstück in das Abführrohr hinein ausstößt.

Es sind auch Revolver-Drehautomaten bekannt (Maschinenbeschreibung für Drehautomaten TNS 30D-TX-8D der TRAUB AG vom Februar 1984), bei denen eine am Revolver angeordnete Gegenspindel einen über eine Feder abgestützten Auswerfer enthält. Die Feder wird jeweils gespannt, wenn ein Werkstück von einer Hauptspindel an die Gegenspindel übergeben wird. Die Federspannung bleibt solange gespeichert, wie das Werkstück in der Spannvorrichtung der Gegenspindel gespannt bleibt. Erst beim Öffnen dieser Spannvorrichtung wird die Federspannung des Auswerfers frei, und das dadurch ausgestoßene Werkstück fällt in eine Auffangschale, die zu diesem Zweck automatisch in den Arbeitsraum der Maschine gebracht worden ist und anschließend wieder zurück gezogen wird, um das Werkstück beispielsweise in einen Behälter zu fördern.

Bei solchen Werkzeugmaschinen läßt sich nicht vollständig ausschließen, daß ein Werkstück oder der Auswerfer sich in der Gegenspindel verklemmt und das Werkstück infolgedessen nicht aus der Gegenspindel ausgestoßen wird. Wenn dann ein nächster Arbeitszyklus eingeleitet wird, besteht die Gefahr, daß durch Kollision eines neuen Werkstücks oder eines Werkzeugs mit dem hängengebliebenen Werkstück großer Schaden entsteht. Ähnliche Gefahren können auch bei Werkzeugmaschinen auftreten, bei denen eine an einer Hauptspindel angeordnete Spannvorrichtung das Werkstück bis zu dessen vollständiger Bearbeitung festhalten soll. In einer solchen Spannvorrichtung kann beispielsweise ein Reststück einer Werkstoffstange hängenbleiben, das dann mit dem Anfang einer neu zugeführten Werkstoffstange kollidiert.

Es ist zwar grundsätzlich möglich, Spannvorrichtungen an Werkzeugmaschinen unmittelbar auf das Vorhandensein oder Fehlen eines Werkstücks zu überwachen. Eine solche unmittelbare Überwachung, beispielsweise mit einer Lichtschranke, ist jedoch im Arbeitsraum einer spanabhebenden Werkzeugmaschine wegen der dort unvermeidlichen Werkstoffspäne und meist auch Kühlflüssigkeit schwierig und in vielen Fällen unzuverlässig. Deshalb haben sich optoelektronische Überwachungseinrichtungen, wie sie beispielsweise aus der DE 1774520 B2 zur Werkstückauswurfkontrolle sowie aus der DE 3434461 A1 zur Werkzeugbruchüberwachung bekannt sind, für die Überwachung des Vorhandenseins oder Fehlens eines Werkstücks in einer Spannvorrichtung einer Werkzeugmaschine nicht besonders bewährt.

Es ist zwar auch, beispielsweise aus der DE 2352883 A1 bekannt, einen Zwischenspeicher, den Werkstücke auf dem Weg zwischen zwei Werkzeugmaschinen oder Bearbeitungsstationen durchwandern, auf das Vorhandensein oder Fehlen von Werkstücken abzutasten. Mit einer solchen Abtastung läßt sich aber eine vorgeschaltete Werkzeugmaschine nur mit einer Verzögerung überwachen, die in vielen Fällen mit der angestrebten Betriebssicherheit der Maschine und einer weitgehenden Ausnutzung der Maschinenzeiten nicht zu vereinbaren ist.

Schließlich ist aus der DE 3403814 A1 auch eine akustische Erfassungsvorrichtung für Werkzeugbeschädigungen bei automatisch gesteuerten Werkzeugmaschinen bekannt. Dabei ist zum Erzeugen von Warnanzeigen bezüglich der Beschädigung eines Schneidwerkzeugs eine Fühlereinrichtung vorgesehen, die mit der Werkzeugmaschine gekoppelt ist, um den bei einer Bearbeitung abgestrahlten Schall zu erfassen und ein Überwachungssignal zu erzeugen, dessen Amplitude den Pegel der Schallabstrahlung anzeigt. Auch damit läßt sich jedoch nicht rechtzeitig, ehe eine Beschädigung eines Werkzeugs oder größerer Teile der Maschine zu befürchten ist, feststellen, ob eine Spannvorrichtung sich in einem vorgesehenen Abschnitt eines Bearbeitungszyklus nicht nur geöffnet, sondern auch tatsächlich von einem bisher gespannt gehaltenen Werkstück befreit worden ist.

Der Erfindung liegt deshalb die Aufgabe zugrunde, ein Verfahren und eine Einrichtung zum Überwachen einer programmgesteuerten Werkzeugmaschine derart auszugestalten, daß das Hängenbleiben eines Werkstücks in einer Spannvorrichtung zuverlässig und ohne nennenswerten Zeitverlust Steuerungsbefehle von an sich bekannter Art auslöst, durch die Beschädigungen vermieden werden.

Der verfahrenstechnische Teil dieser Aufgabe ist erfindungsgemäß, ausgehend von einem Verfahren der eingangs be schriebenen Gattung, dadurch gelöst, daß eine durch Aufprall des ausgeworfenen Werkstücks an der Auffangvorrichtung ausgelöste Erschütterung an einer Stelle außerhalb des Arbeitsraums überwacht wird und Funktionen der Maschine zum Zuführen und Bearbeiten eines nachfolgenden Werkstücks stillgesetzt werden, wenn die Erschütterung während einer bestimmten Zeitspanne nach dem Öffnen der Spannvorrichtung ausbleibt.

Die Auffangvorrichtung ist dem Einfluß von Spänen und Kühlflüssigkeit entweder nicht oder weniger unmittelbar ausgesetzt, als die Spannvorrichtung, die eigentlich überwacht werden soll. Die Überwachung der Auffangvorrichtung wird auch weniger als eine Überwachung der eigentlich interessierenden Spannvorrichtung durch Rücksichtnahme auf den Platzbedarf von Werkzeugen erschwert.

Die erfindungsgemäße mittelbare Überwachung einer Spannvorrichtung durch Aufnahme von Signalen an einer Auffangvorrichtung bedeutet andererseits nicht, daß ein nennenswerter Zeitverlust hingenommen werden müßte, denn die Zeit, die ein aus der Spannvorrichtung ausgeworfenes Werkstück für seinen Weg zur Auffangvorrichtung braucht, läßt sich durch geeignete Anordnung der Auffangvorrichtung vernachlässigbar gering halten.

Erschütterungen, die das Werkstück beim Aufprall auf die Auffangvorrichtung erzeugt, lassen sich mit bekannten Sensoren außerordentlich selektiv und somit zuverlässig erfassen, da die träge Masse jedes einzelnen Werkstücks, das von einer automatischen Werkzeugmaschine bearbeitet worden ist, ebenso genau bekannt ist wie die Parameter der Bewegung des Werkstücks von der Spannvorrichtung zur Auffangvorrichtung. Stärke und Verlauf der Erschütterung, die jedes einzelne Werkstück beim Aufprall auf die Auffangvorrichtung erzeugt, sind deshalb ebenfalls im Voraus bekannt.

Der Schwingungsverlauf der Erschütterung wiederholt sich bei den einzelnen Werkstücken einer Serie gleicher Werkstücke erstaunlicherweise derart genau, daß er auch mit einem in größerem Abstand von der Aufprallstelle angeordneten Schwingungssensor bekannter Art aufgenommen und von einer Schaltung ebenfalls bekannter Art zuverlässig ausgewertet und von anderen Schwingungen der Werkzeugmaschine unterschieden werden kann. Es hat sich deshalb als unschädlich erwiesen, wenn bestimmte Maschinenbewegungen, die ihrerseits mit Schwingungen verbunden sind, beispielsweise das Weiterschalten eines Revolvers, schon während der Zeitspanne beginnen, die für die erfindungsgemäße mittelbare Überwachung der Spannvorrichtung vorgesehen ist.

Zur Unterscheidung der vom Werkstück hervorgerufenen Erschütterung von anderen Erschütterungen der Maschine ist es zweckmäßig, wenn die Amplituden einer vom Aufprall des Werkstücks erzeugten Schwingung über eine bestimmte Zeitspanne integriert werden und ein Signal nur dann abgegeben wird, wenn das Integral einen bestimmten Schwellenwert übersteigt.

Alternativ oder zusätzlich kann ein Kriterium für die Unterscheidung des Aufpralls des Werkstücks von anderen Erschütterungen der Maschine dadurch gewonnen werden, daß die Amplituden einer vom Aufprall des Werkstücks erzeugten Schwingung differenziert werden und ein Signal nur dann abgegeben wird, wenn das Differential einen bestimmten Schwellenwert übersteigt.

Ebenfalls alternativ oder zusätzlich kann es zweckmäßig sein, daß die Frequenz einer vom Aufprall des Werkstücks erzeugten Schwingung überwacht wird und ein Signal nur dann abgegeben wird, wenn die Frequenz innerhalb eines bestimmten Frequenzbandes liegt.

Der vorrichtungstechnische Teil der Erfindungsaufgabe ist erfindungsgemäß, wiederum ausgehend von einer programmgesteuerten Werkzeugmaschine der eingangs beschriebenen Gattung, dadurch gelöst, daß mit der Auffangvorrichtung ein außerhalb des Arbeitsraums der Maschine angeordneter Sensor verbunden ist, der an die Maschinensteuerung angeschlossen und zum Abgeben eines Signals ausgebildet ist, das durch Aufprall eines Werkstücks auf die Auffangvorrichtung auslösbar ist.

Eine solche Einrichtung kann das an sich bekannte Merkmal aufweisen, daß die Auffangvorrichtung einen ortsfesten Auffangtrichter aufweist, an den sich ein Rohr oder Schlauch für den Weitertransport des aufgefangenen Werkstücks anschließt. In diesem Fall ist der Sensor außen an den Auffangtrichter angebaut.

Alternativ kann bei der erfindungsgemäßen Einrichtung das ebenfalls an sich bekannte Merkmal verwirklicht sein, daß die Auffangvorrichtung eine Auffangschale aufweist, die zum Auffangen des Werkstücks in den Arbeitsraum der Maschine hinein-und anschließend aus diesem herausbewegbar an einer Halterung abgestützt ist. In diesem Fall ist es zweckmäßig, wenn der Sensor an der Halterung angeordnet ist.

Bei beiden im vorstehenden beschriebenen Alternativen ist es vorteilhaft, wenn der Auffangtrichter bzw. die Auffangschale innen mit einem aufpralldämpfenden Material ausgekleidet ist.

Ausführungsbeispiele der Erfindung werden im folgenden anhand schematischer Zeichnungen mit weiteren Einzelheiten erläutert. Es zeigen:

Fig. 1 bis 3 drei verschiedene Ausführungsformen einer erfindungsgemäßen Einrichtung an einem Drehautomaten und

Fig. 4 ein Diagramm eines Arbeitszyklus des Drehautomaten.

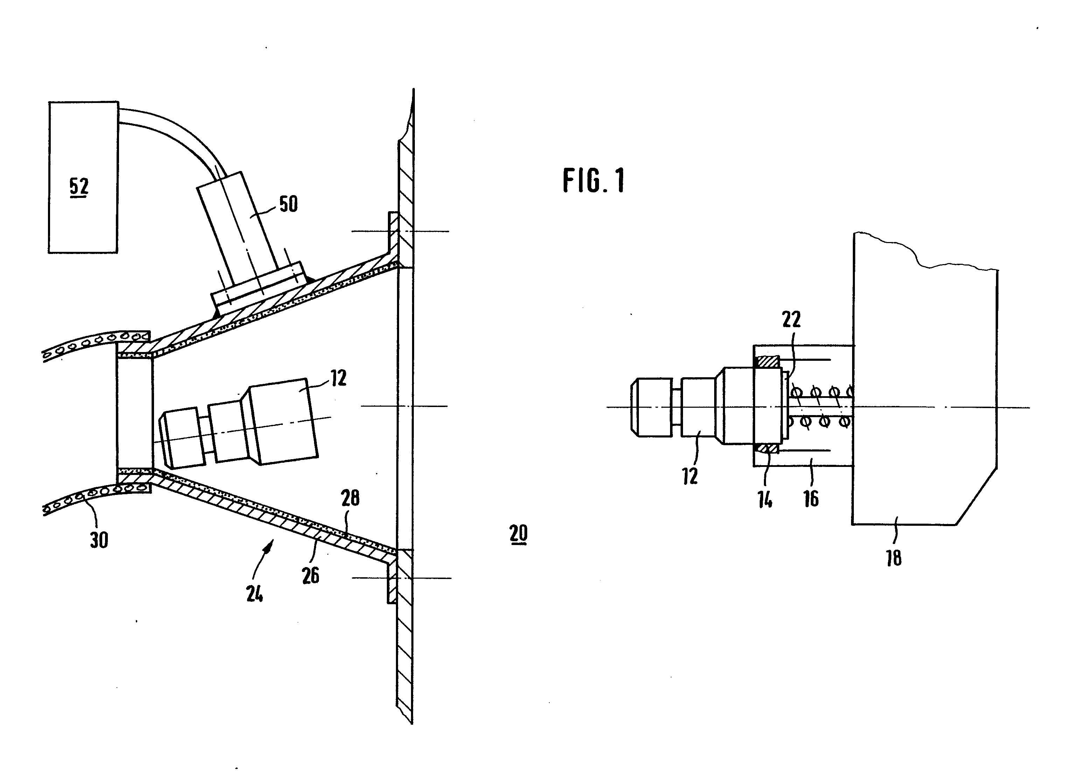

Gemäß Fig. 1 ist ein Werkstück 12, es handelt sich um ein Drehteil, in einer Spannvorrichtung 14 festgehalten, die zu einer Spindel 16 gehört. Die Spindel 16 ist eine an einem Revolver 18 gelagerte Gegenspindel eines Drehautomaten. Der Revolver 18 ist wie üblich an einer (nicht dargestellten) Kreuzschlittenanordnung gelagert; er ist daher in zwei zueinander rechtwinkligen Richtungen verschiebbar und um seine Achse A schrittweise drehbar, um nacheinander verschiedene nicht dargestellte Werkzeuge innerhalb des Arbeitsraums 20 des Drehautomaten in üblicher Weise wirksam werden zu lassen. Als Arbeitsraum 20 ist derjenige Raum definiert, in dem mindestens ein Werkzeug des Drehautomaten auf ein Werkstück 12 einwirken kann.

Das in der Spannvorrichtung 14 eingespannte Werkstück 12 ist fertig bearbeitet und soll beim Öffnen der Spannvorrichtung automatisch ausgestoßen werden. Zu diesem Zweck ist innerhalb der Spindel 16 ein federnder Auswerfer 22 angeordnet, der beim Einsetzen des Werkstücks 12 in die Spannvorrichtung 14 Federarbeit gespeichert hat. Diese Federarbeit wird nach dem Öffnen der Spannvorrichtung 14 in Bewegungsenergie des Werkstücks 12 umgesetzt, so daß dieses in freier Flugbahn einer Auffangvorrichtung 24 zugeführt wird, der die Spindel 16 durch entsprechende Bewegungen des Revolvers 18 genähert worden ist.

Die Auffangvorrichtung 24 hat einen ortsfest angeordneten, an den Arbeitsraum 20 der Maschine angrenzenden Auffangtrichter 26, der mit einem aufpralldämpfenden Material 28 ausgekleidet ist. An den Auffangtrichter 26 schließt sich ein Schlauch 30 an, der zu einem Behälter oder zu einer das Werkstück 12 weiterbearbeitenden Maschine führt.

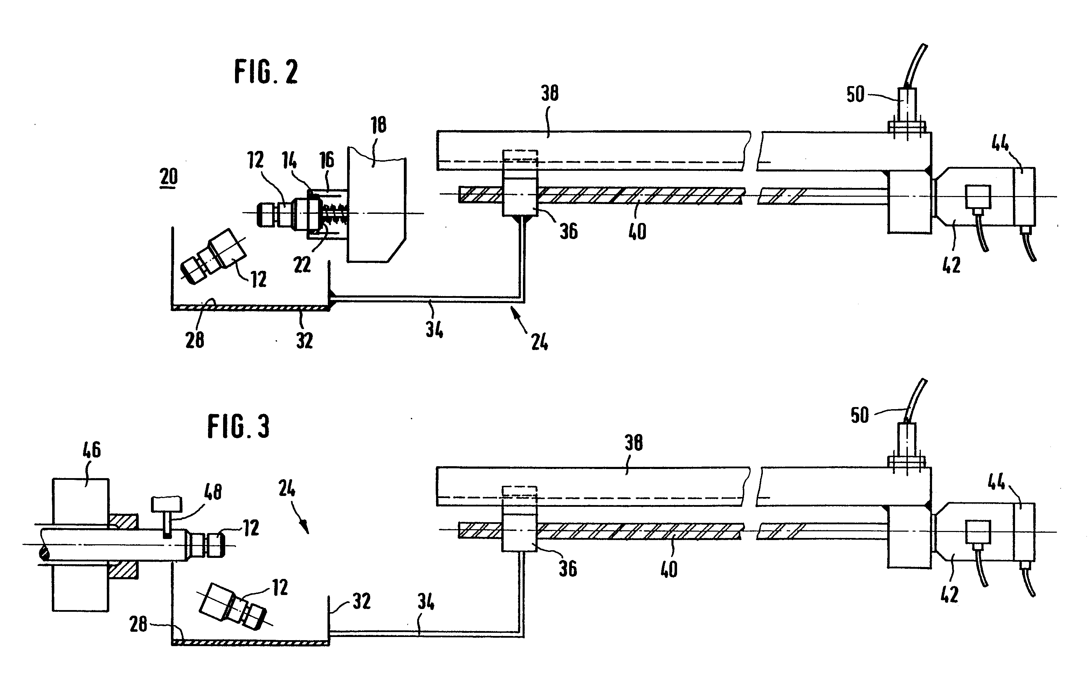

Bei den in Fig. 2 und 3 dargestellten Ausführungsformen weist die als Ganzes wiederum mit 24 bezeichnete Auffangvorrichtung eine Auffangschale 32 auf, die während des Hauptteils jedes Arbeitszyklus der Drehmaschine eine Ruhestellung außerhalb des Arbeitsraums 20 einnimmt, jeweils nur zum Auffangen eines Werkstücks 12 in den Arbeitsraum hineinbewegt wird und diesen dann zusammen mit dem Werkstück sofort wieder verläßt. Für diese Bewegungen ist die Auffangschale 32 über einen Kragarm 34 an einem Schlitten 36 befestigt, der längs einer im dargestellten Beispiel waagerechten Führung 38 mittels einer Gewindespindel 40 hin-und herbewegbar ist. Die Gewindespindel 40 ist von einem Servomotor 42 antreibbar, dem eine Meßeinrichtung 44 zugeordnet ist, so daß die Stellung der Auffangschale 32 in jedem Augenblick feststellbar ist.

Die Anordnung gemäß Fig. 2 unterscheidet sich im übrigen nicht von der in Fig. 1 dargestellten; auch in Fig. 2 ist die Spannvorrichtung 14 an einem Revolver 18 angeordnet.

Fig. 3 zeigt die Anordnung einer Auffangvorrichtung 24, die mit der in Fig. 2 dargestellten übereinstimmt, zum Auffangen eines Werkstücks 12, das an einer Hauptspindel 46 eingespannt ist, dort bearbeitet worden ist und schließlich mittels eines Abstechstahls 48 abgestochen wird, um im freien Fall in die Auffangschale 32 zu fallen.

Gemäß Fig. 2 und 3 ist die Auffangschale 32, ähnlich wie in Fig. 1 der Auffangtrichter 26, mit einem aufpralldämpfenden Material 28 ausgekleidet.

Der Auffangvorrichtung 24 in jeder ihrer in Fig. 1 bis 3 dargestellten Ausführungsformen ist ein Sensor 50 zugeordnet, der an eine nur schematisch angedeutete Maschinensteuerung 52 angeschlossen ist. Die Maschinensteuerung 52 steuert in üblicher Weise sämtliche Funktionen der Maschine, beispielsweise die Bewegungen des Revolvers 18, der Auffangschale 32 und der Hauptspindel 46.

Der Sensor 50 ist ein Schwingungsaufnehmer, der bei allen dargestellten Beispielen außerhalb des Arbeitsraums 20 angeordnet und gegen Einwirkung von Spänen, Kühlflüssigkeit und auch vor Kollision mit Werkstücken und Werkzeugen geschützt ist. Gemäß Fig. 1 ist der Sensor 50 an die Außenseite des Auffangtrichters 26 angebaut. Gemäß Fig. 2 und 3 ist der Sensor 50 hingegen an das vom Arbeitsraum 20 entfernte Ende der Führung 38 angebaut.

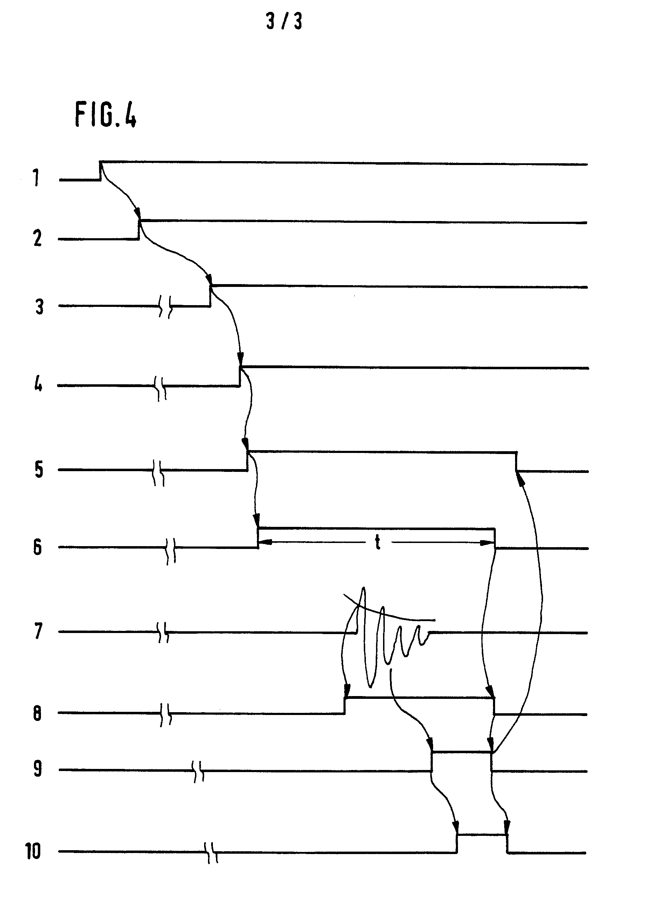

Fig. 4 ist ein Schema eines typischen Arbeitszyklus der in Fig. 2 oder 3 dargestellten Einrichtung. In den einzelnen, mit 1) bis 10) bezeichneten, Phasen des Arbeitszyklus geschieht folgendes:

1) Ein Werkstück 12 ist fertig bearbeitet.

2) Die Auffangschale 32 wird im Arbeitsraum 20 bereitgestellt.

3) Die Spindel 16 nimmt ihre Ausstoßposition ein.

4) Die Spannvorrichtung 14 wird geöffnet.

5) Der Sensor 50 wird aktiviert.

6) Es beginnt eine Zeitspanne t, auf welche die Auswertung von Signalen des Sensors 50 beschränkt ist.

7) Es entstehen Schwingungen durch den Aufprall eines Werkstücks 12 auf die Auffangschale 32.

8) Die Schwingungen werden ausgewertet.

9) Die Auswertung führt zur Ausgabe eines Signals.

10) Das Signal wird quittiert. Beim Ausbleiben des Signals innerhalb der Zeitspanne t wird eine Fehlermeldung abgegeben und die Drehmaschine sofort stillgesetzt.

Eine Schaltungsanordnung zum Erkennen des Aufpralls eines Werkstücks 12 auf eine Auffangvorrichtung ist Gegenstand der prioritätsgleichen deutschen Patentanmeldung der Fa. Euchner & Co., D-7022 Leinfelden-Echterdingen, unter der Reg.-Nr. 127 048, Patentanwaltsakte 3341 rne, auf die hiermit Bezug genommen wird.

## Ansprüche

1. Verfahren zum Überwachen einer programmgesteuerten Werkzeugmaschine für die spanabhebende Bearbeitung von Werkstücken (12) mit
- mindestens einer automatisch öffnenden und -schließenden Spannvorrichtung (14) für ein Werkstück (12), das innerhalb eines Arbeitsraums (20) der Maschine zu bearbeiten ist,
- einer Auffangvorrichtung (24) zum Auffangen des nach der Bearbeitung von der Spannvorrichtung (14) freigegebenen Werkstücks (12) und für dessen Abtransport aus dem Arbeitsraum (20), und
- einer Maschinensteuerung (52), welche die Bearbeitung des Werkstücks (12) sowie die Spannvorrichtung (14) steuert,
dadurch **gekennzeichnet,** daß eine durch Aufprall des ausgeworfenen Werkstücks (12) an der Auffangvorrichtung (24) ausgelöste Erschütterung an einer Stelle außerhalb des Arbeitsraums (20) überwacht wird und Funktionen der Maschine zum Zuführen und Bearbeiten eines nachfolgenden Werkstücks (12) stillgesetzt werden, wenn die Erschütterung während einer bestimmten Zeitspanne (t) nach dem Öffnen der Spannvorrichtung (14) ausbleibt.

2. Verfahren nach Anspruch 1,
dadurch **gekennzeichnet,** daß die Amplituden einer vom Aufprall des Werkstücks (12) erzeugten Schwingung über eine bestimmte Zeitspanne (t) integriert werden und ein Signal nur dann abgegeben wird, wenn das Integral einen bestimmten Schwellenwert übersteigt.

3. Verfahren nach Anspruch 2,
dadurch **gekennzeichnet,** daß die Amplituden einer vom Aufprall des Werkstücks (12) erzeugten Schwingung differenziert werden und ein Signal nur dann abgegeben wird, wenn das Differential einen bestimmten Schwellenwert übersteigt.

4. Verfahren nach Anspruch 2 oder 3,
dadurch **gekennzeichnet,** daß die Frequenz einer vom Aufprall des Werkstücks (12) erzeugten Schwingung überwacht wird und ein Signal nur dann abgegeben wird, wenn die Frequenz innerhalb eines bestimmten Frequenzbandes liegt.

5. Einrichtung zum Durchführen des Verfahrens nach einem der Ansprüche 1 bis 4 an einer programmgesteuerten Werkzeugmaschine für die spanabhebende Bearbeitung von Werkstücken (12) mit
- mindestens einer automatisch öffnenden und -schließenden Spannvorrichtung (14) für ein Werkstück (12), das innerhalb eines Arbeitsraums (20) der Maschine zu bearbeiten ist,
- einer Auffangvorrichtung (24) zum Auffangen des nach der Bearbeitung von der Spannvorrichtung (14) freigegebenen Werkstücks (12) und für dessen Abtransport aus dem Arbeitsraum (20), und
- einer Maschinensteuerung (52), welche die Bearbeitung des Werkstücks (12) sowie die Spannvorrichtung (14) steuert,
dadurch **gekennzeichnet,** daß mit der Auffangvorrichtung (24) ein außerhalb des Arbeitsraums (20) der Maschine angeordneter Sensor (50) verbunden ist, der an die Maschinensteuerung (52) angeschlossen und zum Abgeben eines Signals ausgebildet ist, das durch Aufprall eines Werkstücks (12) auf die Auffangvorrichtung (24) auslösbar ist.

6. Einrichtung nach Anspruch 5,
dadurch **gekennzeichnet,** daß die Auffangvorrichtung (24) einen ortsfesten Auffangtrichter (26) aufweist, an den sich ein Rohr oder Schlauch (30) für den Weitertransport des aufgefangenen Werkstücks (12) anschließt, und der Sensor (50) außen an den Auffangtrichter (26) angebaut ist.

7. Einrichtung nach Anspruch 6, dadurch **gekennzeichnet,** daß die Auffangvorrichtung (24) eine Auffangschale (32) aufweist, die zum Auffangen des Werkstücks (12) in den Arbeitsraum (20) der Maschine hinein-und anschließend aus diesem herausbewegbar an einer Halterung (34-38) abgestützt ist, und daß der Sensor (50) an der Halterung (34-38) angeordnet ist.

8. Einrichtung nach Anspruch 6 oder 7, dadurch **gekennzeichnet,** daß der Auffangtrichter (26) bzw. die Auffangschale (32) innen mit einem aufpralldämpfenden Material (28) ausgekleidet ist.

FIG. 1

52

50

30

24

26

28

12

20

22

12

14

16

18

0 282 717

FIG. 2

FIG. 3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 320 247 (INDEX-WERKE)<br>* Ansprüche 1, 4, 7; Figuren 1, 2 *<br>--- | 1,5 | B 23 Q 11/00<br>B 23 B 15/00 |
| Y | GB-A-1 008 376 (CONTRONICS)<br>* Seite 1, Zeilen 53-68; Ansprüche 1-7; Figur 1 *<br>--- | 1,5 | |
| Y | GB-A- 975 815 (SOCIETE ORNANAISE DE CONSTRUCTIONS MECANIQUES)<br>* Seite 2, Zeilen 21-26; Anspruch 1 *<br>--- | 1,5 | |
| Y<br>. | VDI-RICHTLINIEN-VDI 3360, Blatt 2, Januar 1966, Seiten 1-6, Berlin; "Sicherung von Stanzwerkzeugen"<br>* Seite 1, Figur 1; Seite 5, Figur 16 * | 1,5 | |
| A | idem<br>--- | 6 | |
| A | DE-A-2 600 680 (WESTINGHOUSE ELECTRIC)<br>* Seiten 12-14; Ansprüche 1, 5, 6 *<br>--- | 1-4 | |
| A | GB-A-2 136 125 (CITIZEN WATCH)<br>* Ansprüche 1-4; Figur 3 *<br>--- | 1 | RECHERCHIERTE SACHGEBIETE (Int. Cl.4) |
| D,A | DE-A-2 352 883 (VEB WERKZEUGMASCHINENKOMBINAT)<br>* Anspruch 1 *<br>--- | 1 | B 21 D 55/00<br>B 23 B 15/00<br>B 23 B 25/06<br>B 23 Q 7/00<br>B 23 Q 11/00<br>B 30 B 15/32 |
| A | DE-B-1 774 520 (VESTER)<br>* Anspruch 1 *<br>--- | 1 | |
| A | DE-A-2 823 479 (ARDEX)<br>* Ansprüche 1, 7 *<br>----- | 7,8 | |

Der vorliegende Recherchenbericht wurde für alle Patentansprüche erstellt

| Recherchenort | Abschlußdatum der Recherche | Prüfer |
|---|---|---|
| BERLIN | 15-04-1988 | MARTIN A E W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)